(19) Europäisches Patentamt
European Patent Office
Office européen des brevets

(11) **EP 3 297 258 B1**

(12) **EUROPEAN PATENT SPECIFICATION**

(45) Date of publication and mention
of the grant of the patent:
**26.08.2020 Bulletin 2020/35**

(51) Int Cl.:
**H04L 29/12** (2006.01)          **H04L 12/28** (2006.01)
**H04L 29/08** (2006.01)

(21) Application number: **17191396.5**

(22) Date of filing: **15.09.2017**

(54) **COMMISSIONING OF A SENSOR IN A HOME AUTOMATION SYSTEM**

INBETRIEBNAHME EINES SENSORS IN EINEM HEIMAUTOMATISIERUNGSSYSTEM

MISE EN SERVICE D'UN CAPTEUR DANS UN SYSTÈME DOMOTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2016 BE 201605699**

(43) Date of publication of application:
**21.03.2018 Bulletin 2018/12**

(73) Proprietor: **Niko NV**
**9100 Sint-Niklaas (BE)**

(72) Inventors:
• **VANISTERDAAL, Koen**
**2018 Antwerpen (BE)**
• **VELDEMAN, Pol**
**9140 Temse (BE)**
• **DEGRYSE, Tom**
**9340 Smetlede (BE)**
• **LUYPAERT, Bart**
**9310 Moortsel (BE)**

(74) Representative: **DenK iP**
**Hundelgemsesteenweg 1116**
**9820 Merelbeke (BE)**

(56) References cited:
**US-A1- 2015 334 187**

## Description

## Technical field of the invention

The present invention relates to commissioning, i.e. installing, configuration and addressing, of sensors that are part of a home automation system. More particularly, the present invention relates to commissioning, i.e. installing, configuration and addressing at least one sensor that is part of a home automation system.

## Background of the invention

Home automation systems comprise a lot of elements or products, such as lights, sensors, controllers, actuators, roller blinds, heating and/or cooling systems, .... Before they can be used, these items or products need to be addressed, identified and configured to become part of that home automation system. With products having a physical button, this is no problem. The installer only needs to push this button to identify the product. Typically, the installer walks through the house, pushes the buttons of the products, and memorizes the sequence of the products before he identifies and addresses the products on, for example, a computer.

However, more and more there is a need for minimalistic designs with as less additional features as possible. So, preferably the products may not have buttons or any other item to be pushed or twisted or ... to identify them during installation. Hence, when two or more of such sensors are provided in a house for connecting to a same home automation system, it might be a problem to properly identify and address these sensors.

US 2015/0334187 describes a system that comprises a sensor apparatus that is configured to send an identification message over a wireless communication network in response to a trigger event sensed by a sensor device comprised in the sensor apparatus. The trigger event may, for example, relate to illumination in proximity of the sensor apparatus.

US 2015/0334187 does not relate to the commissioning of sensors in a home automation system, but rather to a way of using of particular sensors in a system. Using this method for commissioning could have the disadvantage of providing false signals. For example, when the sensor is accidently illuminated, the commissioning process can start even if such commissioning process is not wanted. This can even happen when the sensor is already in use.

## Summary of the invention

The present invention provides a method for commissioning at least one sensor that is part of a home automation system. With commissioning is meant the process of exchanging credentials with the network so the at least one sensor can start communicating with the home automation system and comprises installing, configuration and addressing the at least one sensor in the home automation system.

The method comprises physically installing the at least one sensor in a ceiling or a wall of a building, programming the at least one sensor by means of configuration software, the configuration software being located on a computer, laptop, tablet or smartphone, and setting the at least one sensor in addressing mode, for making it possible for the at least one sensor (10a-10d) to receive a unique identification in the home automation system in the form of a MAC address. With programming the at least one sensor is meant introducing settings on how the sensor should work. With addressing is meant the allocation of a MAC address to the at least one sensor. Such MAC address is the information needed to find the at least one sensor in the system, or in other words is a unique identification number for the sensor to be identified in the home automation system. Commissioning the at least one sensor comprises exposing the at least one sensor to a light intensity change from a first light intensity into a second light intensity such that a predefined threshold value of the change is crossed, i.e. the at least one sensor is programmed to only react to such change when the change is high enough, i.e. when the light intensity change threshold value may at least be 15% of the maximum of a work range on which the light measuring range of the sensor is mapped. The method further comprises, upon crossing the threshold value of the change, sending a signal from the at least one sensor to the configuration software of the home automation system, the signal being representative of the MAC address of the at least one sensor, and identifying the at least one sensor (10a-10d) by its MAC address and correlating the MAC address with the physical location of the at least one sensor.

According to particular embodiments of the invention, addressing the at least one sensor may comprise illuminating the sensor beyond a particular threshold value, upon crossing that threshold value, sending a signal from the at least one sensor to the configuration software of the home automation system, the signal being representative of the MAC address of the at least one sensor, and correlating the MAC address with the physical location of the at least one sensor to identify the at least one sensor.

By, in advance in the factory, programming the sensor such that it only reacts on a change in light intensity by sending its MAC address to the configuration software of the home automation system when the change in light intensity is high enough, false signal sending can be avoided. Hence, identifying or addressing the at least one sensor is more reliable and mistakes can be minimized. Further, with a method according to embodiments of the invention, addressing or identifying the at least one sensor can be performed fast and efficient.

Setting the at least one sensor in addressing mode can be done by any kind of feedback given by the sensor, such as, for example, visual or audio feedback. Setting the at least one sensor in addressing mode may be done by means of a controller in a cabinet, a computer or laptop, or an app on a smartphone or tablet.

According to embodiments of the invention, exposing the at least one sensor to a light intensity change from a first light intensity into a second light intensity may be such that the first light intensity is higher than the second light intensity. According to such embodiments, exposing the at least one sensor to a light intensity change may comprise first putting on a light source in the room where the at least one sensor is located and then putting the light source off. This may particularly be useful when there is only little ambient light, such that the difference between the first light intensity and the second light intensity is high enough as is required for the method according to embodiments of the present invention. According to other embodiments, exposing the at least one sensor to a light intensity change may comprise first exposing the at least one sensor to the ambient light in the room and then covering up the at least one sensor, for example with a sensor cap. This embodiment is particularly useful when the ambient light is strong enough so as to introduce a high enough difference between the first light intensity and the second light intensity as required for the method according to embodiments of the present invention.

According to further embodiments, exposing the at least one sensor to a light intensity change from a first light intensity to a second light intensity may be such that the second light intensity is higher than the first light intensity. According to such embodiments, exposing the at least one sensor to a light intensity change may comprise first exposing the at least one sensor to ambient light and then illuminating the at least one sensor with a bright light source. This is particularly useful when there is no strong ambient light. However, when the light source is bright enough for introducing a high enough difference between the first and second light intensity, as is required for the method according to embodiments of the present invention, this may also be a useful method when there is a strong ambient light. According to other embodiments, exposing the at least one sensor to a light intensity change may comprises first exposing the at least one sensor to no light at all, by for example covering up the sensor with a sensor cap or closing the light in case no windows are present in the room, and then exposing the at least one sensor to a light source which is present in the room where the at least one sensor is located, for example by removing the sensor cap or by simply putting on the light source. This may particular be useful in a room where no windows are present and thus no ambient light is present. However, when rooms are present in the room, a sensor cap can be used to close off the at least one sensor. According to embodiments of the invention, the method may be used for commissioning, i.e. installing, configuring and addressing a plurality of sensors and addressing the at least one sensor may comprise addressing all of the sensors one by one in a particular sequence.

The present invention further provides a home automation system comprising configuration software located on a computer, laptop, tablet or smartphone, and at least one sensor. The at least one sensor comprises means for setting the at least one sensor in addressing mode for making it possible for the at least one sensor to receive a unique identification in the home automation system in the form of a MAC address. The at least one sensor is configured to detect changes in light intensity exceeding a light intensity change threshold value, and to, upon detecting such a change exceeding the light intensity change threshold value, send a signal to the configuration software, the signal being representative of the sensor's MAC address. The home automation system is configured to identify the at least one sensor by its MAC address and to correlate this MAC address with the physical location of the at least one sensor through the configuration software.

The light intensity change threshold value may be at least 15% of the maximum of a work range on which the light measuring range of the sensor is mapped.

## Brief description of the drawings

It has to be noted that same reference signs in the different figures refer to same, similar or analogous elements.

Fig. 1 schematically illustrates steps of a method for commissioning devices in a home automation system as known in the art.
Fig. 2 schematically illustrates a floorplan which can be used in the method of Fig. 1.
Fig. 3 schematically illustrates the method of addressing the at least one sensor according to embodiments of the invention.
Fig. 4 illustrates the determination of the light intensity change threshold value according to embodiments of the method of the invention.

## Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified.

Thus, part A being connected to part B is not limited to part A being in direct contact to part B, but also includes indirect contact between part A and part B, in other words also includes the case where intermediate parts are present in between part A and part B.

The term "commissioning" used in the claims and in the description is meant to indicate the process of exchanging credentials with the network, so that the at least one sensor can start communicating with the home automation system. In other words, with commissioning is meant making the at least one sensor part of and ready to be used in the home automation system. Commissioning comprises the steps of installing, configuration and addressing the at least one sensor in the home automation system.

The term "programming" used in the claims and in the description means introducing settings on how the at least one sensor should work. This can be done by a user or installer with the configuration software on a computer or laptop, or with an app on a smartphone or tablet.

The term "addressing" is used for indication the process of allocating a MAC address to the at least one sensor. Such MAC address is the information needed to find the at least one sensor in the system, or in other words is a unique identification number for the sensor to be identified in the home automation system.

Not all embodiments of the invention comprise all features of the invention. In the following description and claims, any of the claimed embodiments can be used in any combination.

The present invention provides a method for commissioning i.e. installing, configuring and addressing the at least one sensor in the home automation system.

The method of commissioning the at least one sensor comprises physically installing the at least one sensor in a ceiling or a wall of a building, programming the at least one sensor by means of configuration software, and addressing the at least one sensor. With addressing is meant the allocation of a MAC address to the at least one sensor. Such MAC address is the information needed to find the at least one sensor in the system, or in other words is a unique identification number for the sensor to be identified in the home automation system. According to the invention, addressing the at least one sensor comprises exposing the at least one sensor to a light intensity change from a first light intensity into a second light intensity such that a predefined threshold value of the change is crossed. Upon crossing the threshold value of the change, a signal is sent from the at least one sensor to the configuration software of the home automation system, the signal being representative of the MAC address of the at least one sensor. In a last step the at least one sensor is identified by its MAC address and the MAC address is correlated with the physical location of the at least one sensor. In the step of addressing, the physical installation and the programming or configuration are coupled to each other.

With a method according to embodiments of the invention, no false signals will be sent from the at least one sensor to the configuration software of the home automation system. By, in advance in the factory, programming the sensor such that it only reacts on a change in light intensity by sending its MAC address to the configuration software of the home automation system when the change in light intensity is high enough, false signal sending can be avoided, because of, for example, accidental illuminating the at least one sensor. Hence, identifying or addressing the at least one sensor is more reliable and mistakes can be minimized, and no "false" or accidental commissioning can occur. Further, with a method according to embodiments of the invention, addressing or identifying the at least one sensor can be performed fast and efficient.

Whenever in the further description and claims sensor is used, this is meant to include any device that is at least able to perform measurement of light.

The present invention will hereinafter be described by means of different embodiments. It has to be understood that these embodiments are only for the ease of understanding the invention and are not intended to limit the invention in any way.

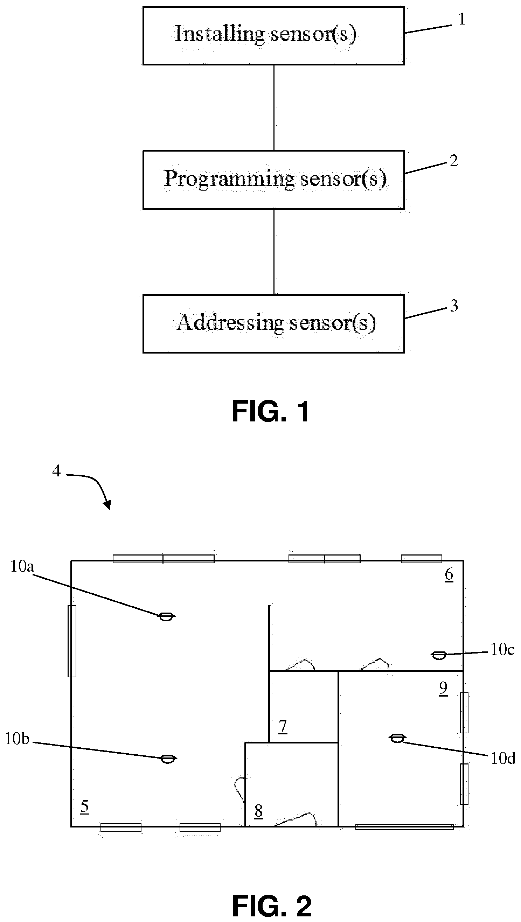

When introducing a home automation system comprising a plurality of devices in a home, or when introducing new devices to such home automation system, the devices need first to be installed, programmed and addressed to make a connection with the home automation system. This is thus also the case for sensors, to which the present invention relates and is schematically represented in Fig. 1. Typically, first the at least one sensor is physically installed in a building (step 1 in Fig. 1). For example, the at least one sensor may be provided in a ceiling and/or in a wall of the building, depending on the application or the preferences of the user(s). Installing of the sensor(s) can be done as known by a person skilled in the art.

After physically installing the at least one sensor, a second step may be programming or configuring of the at least one sensor (step 2 in Fig. 1). For that purpose, a floorplan 4 as illustrated in Fig. 2 may be uploaded in the configuration software of the home automation system. In such floorplan 4 de different rooms 5 to 9 are made visible. The installer or user then adds the at least one sensor to the floorplan 4. For example, two sensors 10a and 10b may be provided in room 5, one sensor 10c in room 8 and one sensor 10d in room 9. Then all of the sensors 10a to 10d are programmed or configured. This means that for each of the sensors 10a to 10d the installer or users defines what the sensors 10a to 10d are supposed to do. This can be done by a user or installer with the configuration software on a computer or laptop, or with an app on a smartphone or tablet. For example, the sensors 10a and 10b may be configured such that, when it gets darker that they trigger one or more lamps to be illuminated in room 5. Further, for example, sensors 10c and 10d may be configured to, when they detect movement in respectively room 6 and 9, trigger the lamp in these rooms 6, 9 to be illuminated. It has to be understood that there are just examples of how sensors 10a to 10d can be configured. According to further embodiments of the invention, the sensors 10a to 10d may be configured as known by a person skilled in the art to perform any suitable action as required by an installer or a user.

It has to be noted that step 1 and step 2 do not necessarily have to be performed in the order as described above. In other words, also first the programming or configuration can be done after which the physical installation of the sensors 10a to 10d can then be performed.

In a next step, the physical installation is then coupled to the programming or configuration, which step is referred to as addressing the sensor(s) (step 3 in Fig. 1). The invention will hereinafter be described for the example of four sensors 10a to 10d. It has, however, to be understood that this is not intended to limit the invention in any way. According to embodiments of the invention, the method may also be used when only one sensor has to be installed, configured and addressed or for any other number of sensors to be installed, configured and addressed.

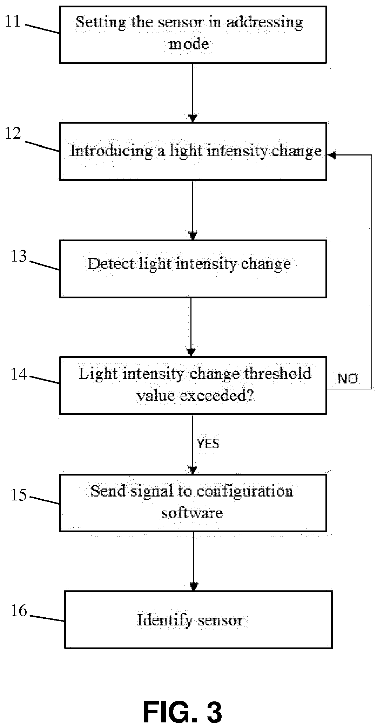

The method of addressing the sensors 10a-10d according to embodiments of the invention is schematically illustrated in Fig. 3. According to embodiments of the invention, first the at least one sensor 10a-10d may be set in addressing mode (step 11 in Fig. 3), so that it is "open" for receiving its unique MAC address to be identified in the home automation system. This may be done by, for example, pushing a button on the controller in the cabinet, or may be done by means of a computer or laptop or by means of an app on a smartphone or tablet. When the at least one sensor 10a-10d is in addressing mode, it may provide some kind of feedback to the installer or user. This feedback may be a visual or audio feedback. For example, in case of visual feedback a LED may start flashing when the sensor 10a-10d is in addressing mode. According to other embodiments and in case of audio feedback, the sensor 10a-10d may, for example, start beeping with a particular frequency when the sensors 10a-10d are in addressing mode. According to further embodiments, the feedback given by the sensors 10a-10d when in addressing mode may be any suitable feedback that can be observed by an installer or user. When the sensors 10a-10d are in addressing mode, each of the sensors 10a-10d is exposed to a light intensity change from a first light intensity to a second light intensity (step 12 in Fig. 3). This may be done in a particular sequence. In the example given, for example, first a light intensity change may be introduced to sensor 10a in room 5, followed by the sensor 10b, after which further a light intensity change is introduced to sensor 10c in room 6 and finally to sensor 10d in room 9.

According to embodiments of the invention, the sensors 10a-10d are upfront, i.e. during manufacturing in the factory, configured to only detect changes in light intensity which are high enough. Therefore, the change in light intensity should be such that it exceeds a light intensity change threshold value. This light intensity change threshold value depends on the kind of sensor that is used, or more particularly, the light intensity change threshold value depends on the light measuring capacity or light measuring range that is programmed upfront, i.e. during manufacturing in the factory, in the sensor 10a-10d. Further, the light intensity change threshold value also depends on the amount of light present when introducing the light intensity change. For example, the light intensity change threshold value will need to be higher the more light there is when starting the addressing step of the method according to embodiments of the invention.

For determining the light intensity change threshold value, the light measuring capacity or light measuring range of the sensor 10a-10d is mapped onto a work range, which depends on a function that is assigned to that work range. In general, the following equation applies:

$$Y = f(\mathrm{lux})$$

wherein f can be any suitable function.

Preferably, according to embodiments of the invention, the light intensity change threshold value may at least be 15% of the maximum of the work range on which the light measuring range of the sensor is mapped. Therefore, according to embodiments of the invention, the sensor 10a-10d is configured upfront, i.e. during manufacturing in the factory, to only send a signal representing its MAC address to the configuration software upon detecting a light intensity change which is higher than 15% of the maximum of the work range on which the light measuring range of the sensor is mapped.

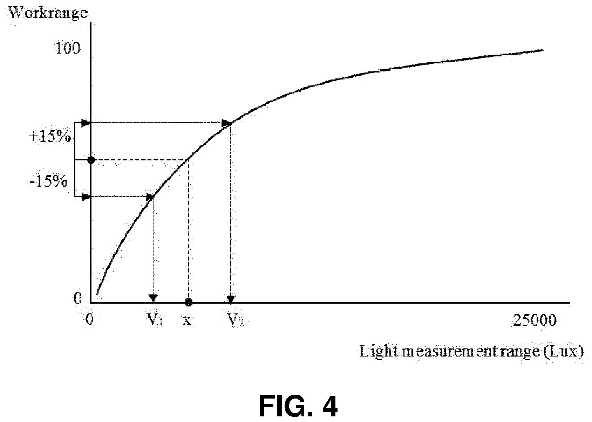

Fig. 4 illustrates this for a sensor 10a-10d of which the light measuring range is set from 0 Lux to 25000 Lux. According to this example, the work range is chosen to be between 0 and 100 and a logarithmic function is choses to map the light measurement range of the sensor 10a-10d onto the work range. The first light intensity is for the example given x (see Fig. 4). This means that, when changing the first light intensity into the second light intensity, the second light intensity should, according to embodiments of the invention, either be lower than $V_1$ Lux or be higher than $V_2$ Lux, for the sensor 10a-10d to send a signal representative of its MAC address to the configuration software.

According to embodiments of the invention, exposing the at least one sensor 10a-10d to a light intensity change from a first light intensity into a second light intensity can be done in different ways. According to embodiments of the invention, exposing the at least one sensor 10a-10d to a light intensity change may be such that the first light intensity is higher than the second light intensity. According to such embodiments, exposing the at least one sensor 10a-10d to a light intensity change may comprise first putting on a light source in the room where the at least one sensor 10a-10d is located and then putting the light source off. This may particularly be useful when there is only little ambient light, such that the difference between the first light intensity and the second light intensity is high enough as is required for the method according to embodiments of the present invention. According to other embodiments, exposing the at least one sensor 10a-10d to a light intensity change may comprise exposing the at least one sensor 10a-10d to the ambient light in the room and then covering up the at least one sensor 10a-10d, for example with a sensor cap. This embodiment is particularly useful when the ambient light is strong enough so as to introduce a high enough difference between the first light intensity and the second light intensity as required for the method according to embodiments of the present invention.

According to further embodiments, exposing the at least one sensor 10a-10d to a light intensity change from a first light intensity into a second light intensity may be such that the second light intensity is higher than the first light intensity. According to such embodiments, exposing the at least one sensor 10a-10d may comprise exposing the at least one sensor 10a-10dto ambient light and then illuminating the at least one sensor 10a-10d with a bright light source. This is particularly useful when there is no strong ambient light. However, when the light source is bright enough for introducing a high enough difference between the first and second light intensity, as is required for the method according to embodiments of the present invention, this may also be a useful method when there is a strong ambient light. According to other embodiments, exposing the at least one sensor 10a-10d to a light intensity change may comprises exposing the at least one sensor 10a-10d to no light at all, by for example covering up the sensor with a sensor cap or closing the light in case no windows are present in the room, and and then exposing the at least one sensor 10a-10d to a light source which is present in the room where the at least one sensor is located, either by removing the sensor cap or by putting on the light source in case there are no windows in the room.

Thus, the sensor 10a-10d detects the change in light intensity (step 13 in Fig. 3). When the sensor 10a-10d detects a light intensity change that is high enough (step 14 in Fig. 4), i.e. when the light intensity change threshold value is at least 15% of the maximum of the work range on which the light measuring range of the sensor is mapped, in the example given when the second light intensity is lower than $V_1$ Lux or be higher than $V_2$ Lux, a signal representative of the MAC address of the sensor 10a-10d has been sent to the configuration software (step 15 in Fig. 3) and the feedback first given by the sensor 10a-10d when putting in addressing mode, will change to a different feedback for indicating that the light intensity change is detected and a signal has been sent to the configuration software. In case of a visual feedback, the LED may go from flashing to, for example, continuously lighting up. In case of an audio feedback, the beeping may change frequency or may change into a continuous sound. Again, it has to be understood that also here, the feedback can be any suitable feedback that can be observed by an installer or a user.

After the signal representative of the MAC address of the sensors 10a-10d has been sent, the MAC addresses of each of the sensors 10a-10d appear on the screen of the computer, laptop, smartphone or tablet, depending on whatever medium is used for the commissioning of the sensors 10a-10d. The MAC addresses appear in the same sequence as the sequence in which they were introduced to the light intensity change. In that way, the sensors 10a-10d are identified and can be correlated with the physical location of the sensors 10a-10d in the rooms 5 to 9.

## Claims

1. Method for commissioning at least one sensor (10a-10d) that is part of a home automation system, the method comprising:

   - physically installing the at least one sensor (10a-10d) in a ceiling or a wall of a building,
   - programming the at least one sensor (10a-10d) by means of configuration software, the configuration software being located on a computer, laptop, tablet or smartphone, and
   - setting the at least one sensor (10a-10d) in addressing mode, for making it possible for the at least one sensor (10a-10d) to receive a unique identification in the home automation system in the form of a MAC address,

   characterized in that commissioning the at least one sensor (10a-10d) comprises:

   - after setting the at least one sensor in addressing mode, exposing the at least one sensor (10a-10d) to a light intensity change from a first light intensity into a second light intensity such that a predefined threshold value of the change is crossed;
   - upon crossing the threshold value of the change, sending a signal from the at least one sensor (10a-10d) to said configuration software, the signal being representative of the MAC address of the at least one sensor (10a-10d), and
   - identifying the at least one sensor (10a-10d) by its MAC address and correlating the MAC address with the physical location of the at least one sensor (10a-10d).

2. Method according to claim 1, the sensor (10a-10d) having a light measuring range, wherein the light intensity change threshold value is at least 15% of the maximum of a work range on which the light measuring range of the sensor (10a-10d) is mapped.

3. Method according to any of the previous clams, wherein setting the at least one sensor (10a-10d) in addressing mode is done by means of a controller in a cabinet, a computer or laptop, or an app on a smartphone or tablet.

4. Method according to any of the previous claims, wherein exposing the at least one sensor (10a-10d) to a light intensity change from a first light intensity into a second light intensity is such that the first light intensity is higher than the second light intensity.

5. Method according to claim 4, wherein exposing the at least one sensor (10a-10d) to a light intensity change from a first light intensity into a second light intensity comprises first putting on a light source in the room (5-9) where the at least one sensor (10a-10d) is located and then putting the light source off.

6. Method according to claim 4, wherein exposing the at least one sensor (10a-10d) to a light intensity change from a first light intensity into a second light intensity comprises first exposing the at least one sensor (10a-10d) to the ambient light in the room (5-9) and then covering up the at least one sensor (10a-10d).

7. Method according to any of claims 1 to 3, wherein exposing the at least one sensor (10a-10d) to a light intensity change from a first light intensity into a second light intensity is such that the second light intensity is higher than the first light intensity.

8. Method according to claim 7, wherein exposing the at least one sensor (10a-10d) to a light intensity change from a first light intensity into a second light intensity comprises first exposing the at least one sensor (10a-10d) to ambient light and then illuminating the at least one sensor (10a-10d) with a bright light source.

9. Method according to claim 7, wherein exposing the at least one sensor (10a-10d) to a light intensity change from a first light intensity into a second light intensity comprises first exposing the at least one sensor (10a-10d) to no light at all and then exposing the at least one sensor to a light source which is present in the room (5-9) where the at least one sensor (10a-10d) is located.

10. Method according to any of the previous claims, the method being used for commissioning a plurality of sensors (10a-10d), wherein addressing the at least one sensor (10a-10d) comprises addressing all of the sensors (10a-10d) one by one in a particular sequence.

11. A home automation system comprising configuration software located on a computer, laptop, tablet or smartphone, and at least one sensor (10a-10d), the at least one sensor (10a-10d) comprising means for setting the at least one sensor (10a-10d) in addressing mode, for making it possible for the at least one sensor (10a-10d) to receive a unique identification in the home automation system in the form of a MAC address, **characterized in that** the at least one sensor (10a-10d) is configured to:

- to detect changes in light intensity exceeding a light intensity change threshold value, and
- to, upon detecting such a change exceeding the light intensity change threshold value, send a signal representative of its MAC address to said configuration software, and **in that** the home automation system is configured to identify the at least one sensor (10a-10d) by its MAC address and to correlate this MAC address with the physical location of the at least one sensor (10a-10d) through the configuration software.

12. A home automation system according to claim 11, wherein the light intensity change threshold value is at least 15% of the maximum of a work range on which a light measuring range of the sensor (10a-10d) is mapped.

**Patentansprüche**

1. Verfahren zur Inbetriebnahme mindestens eines Sensors (10a-10d), der Teil eines Hausautomationssystems ist, wobei das Verfahren umfasst:

- physische Installation des mindestens einen Sensors (10a-10d) in einer Decke oder Wand eines Gebäudes,
- Programmieren des mindestens einen Sensors (10a-10d) mittels Konfigurationssoftware, wobei sich die Konfigurationssoftware auf einem Computer, Laptop, Tablet oder Smartphone befindet, und
- Einstellen des mindestens einen Sensors (10a-10d) in den Adressierungsmodus, damit der mindestens eine Sensor (10a-10d) im Hausautomationssystem eine eindeutige Identifikation in Form einer MAC-Adresse erhalten kann,

**dadurch gekennzeichnet, dass** die Inbetriebnahme des mindestens einen Sensors (10a-10d) umfasst:

- nach dem Einstellen des mindestens einen Sensors in den Adressierungsmodus wird der mindestens eine Sensor (10a-10d) einer Änderung der Lichtintensität von einer ersten Lichtintensität in eine zweite Lichtintensität ausgesetzt, so dass ein vordefinierter Schwellenwert der Änderung überschritten wird;
- beim Überschreiten des Schwellenwerts der Änderung Senden eines Signals von dem mindestens einen Sensor (10a-10d) an die Konfigurationssoftware, wobei das Signal repräsentativ für die MAC-Adresse des mindestens einen Sensors (10a-10d) ist, und
- Identifizieren des mindestens einen Sensors (10a-10d) anhand seiner MAC-Adresse und Korrelieren der MAC-Adresse mit dem physischen Standort des mindestens einen Sensors (10a-10d).

2.    Verfahren nach Anspruch 1, wobei der Sensor (10a-10d) einen Lichtmessbereich aufweist, wobei der Lichtintensitätsänderungsschwellenwert mindestens 15 % des Maximums eines Arbeitsbereichs beträgt, auf dem der Lichtmessbereich des Sensors (10a-10d) abgebildet ist.

3.    Verfahren nach einem der vorhergehenden Ansprüche, wobei das Einstellen des mindestens einen Sensors (10a-10d) in den Adressierungsmodus mittels einer Steuerung in einem Schrank, einem Computer oder Laptop oder einer App auf einem Smartphone oder Tablet erfolgt.

4.    Verfahren nach einem der vorhergehenden Ansprüche, wobei das Aussetzen des mindestens einen Sensors (10a-10d) einer Lichtintensitätsänderung von einer ersten Lichtintensität in eine zweite Lichtintensität derart ist, dass die erste Lichtintensität höher als die zweite Lichtintensität ist.

5.    Verfahren nach Anspruch 4, wobei das Aussetzen des mindestens einen Sensors (10a-10d) einer Lichtintensitätsänderung von einer ersten Lichtintensität in eine zweite Lichtintensität das erste Anlegen einer Lichtquelle in dem Raum (5-9), in dem sich der mindestens eine Sensor (10a-10d) befindet, und dann das Abschalten der Lichtquelle umfasst.

6.    Verfahren nach Anspruch 4, wobei das Aussetzen des mindestens einen Sensors (10a-10d) einer Lichtintensitätsänderung von einer ersten Lichtintensität in eine zweite Lichtintensität das erste Aussetzen des mindestens einen Sensors (10a-10d) gegenüber dem Umgebungslicht im Raum (5-9) und dann das Abdecken des mindestens einen Sensors (10a-10d) umfasst.

7.    Verfahren nach einem der Ansprüche 1 bis 3, wobei das Aussetzen des mindestens einen Sensors (10a-10d) einer Lichtintensitätsänderung von einer ersten Lichtintensität in eine zweite Lichtintensität derart ist, dass die zweite Lichtintensität höher als die erste Lichtintensität ist.

8.    Verfahren nach Anspruch 7, wobei das Aussetzen des mindestens einen Sensors (10a-10d) einer Lichtintensitätsänderung von einer ersten Lichtintensität in eine zweite Lichtintensität das erste Aussetzen des mindestens einen Sensors (10a-10d) gegenüber Umgebungslicht und anschließendes Beleuchten des mindestens einen Sensors (10a-10d) mit einer hellen Lichtquelle umfasst.

9.    Verfahren nach Anspruch 7, wobei das Aussetzen des mindestens einen Sensors (10a-10d) einer Lichtintensitätsänderung von einer ersten Lichtintensität in eine zweite Lichtintensität das erste Aussetzen des mindestens einen Sensors (10a-10d) gegenüber keinem Licht und dann das Aussetzen des mindestens einen Sensors gegenüber einer Lichtquelle umfasst, die in dem Raum (5-9) vorhanden ist, in dem sich der mindestens eine Sensor (10a-10d) befindet.

10.   Verfahren nach einem der vorhergehenden Ansprüche, wobei das Verfahren zum Inbetriebnehmen mehrerer Sensoren (10a-10d) verwendet wird, wobei das Adressieren des mindestens einen Sensors (10a-10d) das Adressieren aller Sensoren (10a-10d) nacheinander in einer bestimmten Reihenfolge umfasst.

11.   Hausautomationssystem, das eine Konfigurationssoftware umfasst, die sich auf einem Computer, Laptop, Tablet oder Smartphone befindet, und mindestens einen Sensor (10a-10d), wobei der mindestens eine Sensor (10a-10d) Mittel zum Einstellen des mindestens einen Sensors (10a-10d) im Adressierungsmodus umfasst, damit der mindestens eine Sensor (10a-10d) im Hausautomationssystem eine eindeutige Identifikation in Form einer MAC-Adresse erhalten kann,
**dadurch gekennzeichnet, dass** der mindestens eine Sensor (10a-10d) konfiguriert ist:

- um Änderungen der Lichtintensität zu erkennen, die einen Schwellenwert für die Änderung der Lichtintensität überschreiten, und
- um beim Erfassen einer solchen Änderung, die den Schwellenwert für die Änderung der Lichtintensität überschreitet, ein für seine MAC-Adresse repräsentatives Signal an die Konfigurationssoftware zu senden, und indem das Hausautomationssystem konfiguriert ist, um den mindestens einen Sensor (10a-10d) durch seine MAC-Adresse zu identifizieren und um diese MAC-Adresse mit dem physischen Standort des mindestens einen Sensors (10a-10d) über die Konfigurationssoftware zu korrelieren.

**12.** Hausautomationssystem nach Anspruch 11, wobei der Schwellenwert für die Änderung der Lichtintensität mindestens 15 % des Maximums eines Arbeitsbereichs beträgt, auf dem ein Lichtmessbereich des Sensors (10a-10d) abgebildet ist.

## Revendications

**1.** Procédé de mise en service d'au moins un capteur (10a-10d) faisant partie d'un système domotique, le procédé comprenant :

- l'installation physique de l'au moins un capteur (10a-10d) dans un plafond ou un mur d'un bâtiment,
- programmer l'au moins un capteur (10a-10d) au moyen d'un logiciel de configuration, le logiciel de configuration étant situé sur un ordinateur, un ordinateur portable, une tablette ou un smartphone, et
- mettre le au moins un capteur (10a-10d) en mode d'adressage, pour permettre à l'au moins un capteur (10a-10d) de recevoir une identification unique dans le système domotique sous la forme d'une adresse MAC,

**caractérisé en ce que** la mise en service de l'au moins un capteur (10a-10d) comprend:

- après avoir mis le au moins un capteur en mode d'adressage, exposer le au moins un capteur (10a-10d) à une changement d'intensité de lumière d'une première intensité de lumière à une seconde intensité de lumière telle qu'une valeur de seuil prédéfinie de la changement est franchie;
- lors du franchissement de la valeur de seuil de la changement, envoyer un signal de l'au moins un capteur (10a-10d) vers ledit logiciel de configuration, le signal étant représentatif de l'adresse MAC de l'au moins un capteur (10a-10d), et
- identifier le au moins un capteur (10a-10d) par son adresse MAC et corréler l'adresse MAC avec l'emplacement physique de l'au moins un capteur (10a-10d).

**2.** Procédé selon la revendication 1, le capteur (10a-10d) ayant une plage de mesure de lumière, dans lequel la valeur de seuil de changement d'intensité de lumière est au moins 15 % du maximum d'une plage de travail sur laquelle la plage de mesure de la lumière du capteur (10a-10d) est mise en correspondance.

**3.** Procédé selon l'une des revendications précédentes, dans lequel le mettre de l'au moins un capteur (10a-10d) en mode d'adressage se fait au moyen d'un dispositif de commande dans un placard, un ordinateur ou un ordinateur portable, ou une application sur un smartphone ou une tablette.

**4.** Procédé selon l'une quelconque des revendications précédentes, dans lequel exposer l'au moins un capteur (10a-10d) à une changement d'intensité de lumière d'une première intensité de lumière en une seconde intensité de lumière est telle que la première intensité de lumière est supérieure à la seconde intensité de lumière.

**5.** Procédé selon la revendication 4, dans lequel exposer l'au moins un capteur (10a-10d) à une changement d'intensité de lumière d'une première intensité de lumière en une seconde intensité de lumière comprend premièrement la mise en place d'une source de lumière dans la pièce (5-9) où se trouve l'au moins un capteur (10a-10d), puis l'extinction de la source de lumière.

**6.** Procédé selon la revendication 4, dans lequel exposer l'au moins un capteur (10a-10d) à une changement d'intensité de lumière d'une première intensité de lumière en une seconde intensité de lumière comprend premièrement l'exposition de l'au moins un capteur (10a-10d) à la lumière ambiante dans la pièce (5-9), puis le recouvrement de l'au moins un capteur (10a-10d).

**7.** Procédé selon l'une quelconque des revendications 1 à 3, dans lequel exposer l'au moins un capteur (10a-10d) à une changement d'intensité de lumière d'une première intensité de lumière en une seconde intensité de lumière est telle que la seconde intensité de lumière est supérieure à la première intensité de lumière.

**8.** Procédé selon la revendication 7, dans lequel exposer l'au moins un capteur (10a-10d) à une changement d'intensité de lumière d'une première intensité de lumière en une seconde intensité de lumière comprend premièrement l'exposition de l'au moins un capteur (10a-10d) à la lumière ambiante, puis l'éclairage de l'au moins un capteur (10a-10d) au moyen d'une source de lumière vive.

**9.** Procédé selon la revendication 7, dans lequel exposer l'au moins un capteur (10a-10d) à une changement d'intensité de lumière d'une première intensité de lumière en une seconde intensité de lumière comprend premièrement l'exposition de l'au moins un capteur (10a-10d) à aucune lumière, puis l'exposition de l'au moins un capteur à une source de lumière qui est présente dans la pièce (5-9) où se trouve l'au moins un capteur (10a-10d).

10. Procédé selon l'une quelconque des revendications précédentes, le procédé étant utilisé pour la mise en service d'une pluralité de capteurs (10a-10d), dans lequel l'adressage de l'au moins un capteur (10a-10d) comprend l'adressage de tous les capteurs (10a-10d) un par un dans une séquence particulière.

11. Système domotique comprenant un logiciel de configuration situé sur un ordinateur, un ordinateur portable, une tablette ou un smartphone, et au moins un capteur (10a-10d), l'au moins un capteur (10a-10d) comprenant un moyen pour mettre l'au moins un capteur (10a-10d) en mode d'adressage, pour permettre à l'au moins un capteur (10a-10d) de recevoir une identification unique dans le système domotique sous la forme d'une adresse MAC, **caractérisé en ce que** l'au moins un capteur (10a-10d) est configuré :

     - pour détecter des changements d'intensité de lumière dépassant une valeur de seuil de changement d'intensité de lumière, et
     - pour, lors de la détection d'une telle changement dépassant la valeur de seuil de changement d'intensité de lumière, envoyer un signal représentatif de son adresse MAC audit logiciel de configuration, et **en ce que** le système domotique est configuré pour identifier l'au moins un capteur (10a-10d) par son adresse MAC et pour corréler cette adresse MAC avec l'emplacement physique de l'au moins un capteur (10a-10d) par l'intermédiaire du logiciel de configuration.

12. Système domotique selon la revendication 11, dans lequel la valeur de seuil de changement d'intensité de lumière est au moins 15% du maximum d'une plage de travail sur laquelle une plage de mesure de lumière du capteur (10a-10d) est mise en correspondance.

Installing sensor(s) — 1

Programming sensor(s) — 2

Addressing sensor(s) — 3

**FIG. 1**

**FIG. 2**

11 — Setting the sensor in addressing mode

12 — Introducing a light intensity change

13 — Detect light intensity change

14 — Light intensity change threshold value exceeded?

NO

YES

15 — Send signal to configuration software

16 — Identify sensor

# FIG. 3

**FIG. 4**

**EP 3 297 258 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150334187 A